# EUROPEAN PATENT SPECIFICATION

(11) **EP 2 889 578 B1**
(45) Date of publication and mention of the grant of the patent: **28.10.2020**
(21) Application number: 13199737.1
(22) Date of filing: 30.12.2013
(51) Int. Cl.: G01C 21/20, G01S 19/48, G01S 19/05, G01S 5/02

(54) **Indoor system for providing navigation data**
Innenraumsystem zur Bereitstellung von Navigationsdaten
Système d'intérieur pour fournir des données de navigation

(43) Date of publication of application: 01.07.2015
(73) Proprietor: 9Solutions Oy, 90590 Oulu (FI)
(72) Inventor: Hiltunen, Antti, 90590 Oulu (FI)
(74) Representative: Kolster Oy Ab

(56) References cited:
- WO-A1-2013/056145
- WO-A1-2013/159217
- DE-A1-102005 014 975
- US-A1- 2003 182 053
- US-A1- 2007 239 813
- US-A1- 2013 131 973

## Description

### TECHNICAL FIELD

The present invention relates to indoor systems capable of providing parameters of a satellite positioning system, e.g. A-GPS (Assisted Global Positioning System) parameters.

### BACKGROUND

A-GPS (Assisted Global Positioning System) parameters may be loaded into a GPS device beforehand so as to facilitate and expedite discovery of positioning satellites when the GPS device is powered on. The A-GPS data may be retrieved from the Internet through an internet connection, for example.

DE 10 2005 014975 discloses a solution where a receiver in a first zone receives signals from a transmitter with an object, and transmits the signals to a monitoring station that registers the object's location. The object's location in a second zone is determined based on a GPS signal obtained by a GPS receiver from the object via a GPS satellite and sent by a GPS transmitter to the monitoring station. A signal generated when the object leaves the first zone and enters the second zone and vice versa respectively activates and deactivates the GPS receiver and GPS transmitter.

US 2007/239813 discloses a system and method of using a context vector and database for location applications. The system can include a transceiver, a plurality of environmental sensors including at least two location technology devices, and a processor coupled to the transceiver and the plurality of environmental sensors. The processor can be programmed to sense an environmental condition for a given location, define a context vector for the given location, detect a context transition corresponding to a change in the environmental condition, and modify an operation of the at least two location technology devices based on the context transition detected.; The processor can be further programmed to form a new context vector based on the context transition and attempt to match the new context vector with a prestored context vector.

WO 2013/056145 discloses a computing device with at least a first processor and a second processor identifies a set of beacons associated with a geofence. The first processor consumes less power when operating than the second processor. The first processor is provided with the identified set of beacons. In beacon watch list embodiments, the first processor detects one or more beacons proximate to the computing device, compares the detected beacons with the provided set of beacons to determine whether the computing device is within the geofence, and updates a location status based on the comparison. In tiered geofencing implementations, the computing device switches among positioning modalities based on a distance from the computing device to the geofence to save power.

US 2003/182053 discloses a solution where a perimeter threshold of an area is defined. The location of a device is tracked using a first location technology when the device precedes the perimeter threshold. The location of the device is tracked using a second location technology when the device exceeds the perimeter threshold.

### BRIEF DESCRIPTION

The invention is defined by the independent claims.

Embodiments are defined in the dependent claims.

### BRIEF DESCRIPTION OF THE DRAWINGS

In the following the invention will be described in greater detail by means of preferred embodiments with reference to the accompanying drawings, in which
Figure 1 illustrates an example of an indoor positioning system;
Figure 2 illustrates an example of a communication network realized in the indoor positioning system of Figure 1;
Figure 3 illustrates a flow diagram of a method for preparing for satellite positioning according to an embodiment of the invention;
Figures 4 to 6 illustrate signalling diagrams of embodiments of the method of Figure 3;
Figures 7 and 8 illustrate embodiments for switching from the satellite positioning to indoor positioning; and
Figures 9 and 10 illustrate block diagrams of apparatuses according to some embodiments of the invention.

### DESCRIPTION OF EMBODIMENTS

The following embodiments are exemplary. Although the specification may refer to "an", "one", or "some" embodiment(s) in several locations, this does not necessarily mean that each such reference is to the same embodiment(s), or that the feature only applies to a single embodiment. Single features of different embodiments may also be combined to provide other embodiments. Furthermore, words "comprising" and "including" should be understood as not limiting the described embodiments to consist of only those features that have been mentioned and such embodiments may contain also features/structures that have not been specifically mentioned.

A satellite navigation system provides autonomous geo-spatial positioning with global coverage. It allows small electronic receivers to determine their location (longitude, latitude, and altitude) to high precision (within a few metres) using time signals transmitted along a line of sight by radio from satellites. A satellite navigation system with global coverage is called generally a global navigation satellite system (GNSS). Examples of GNSSs include Global Positioning System, GLONASS, and Galileo.

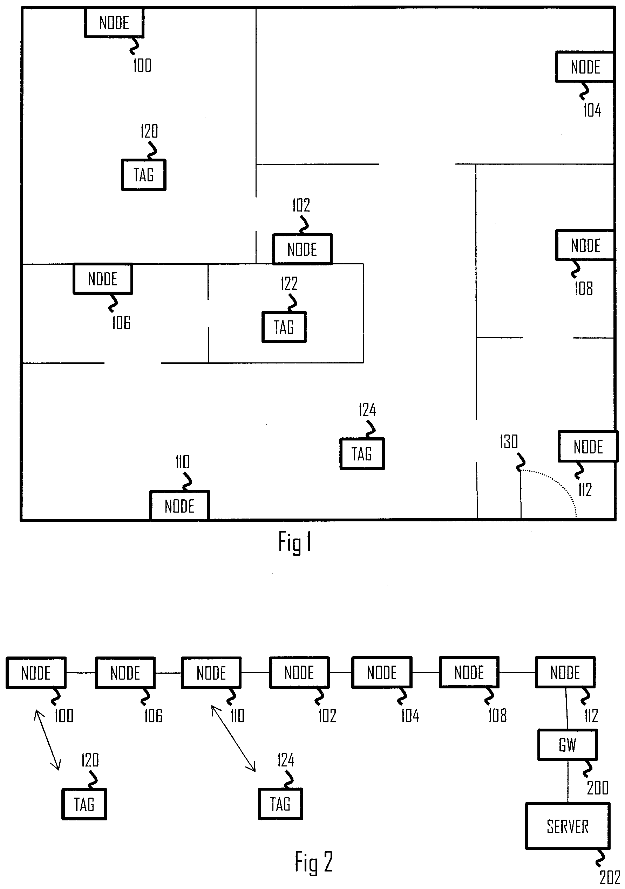

Figure 1 illustrates an exemplary layout of an indoor area to which embodiments of an indoor location tracking system (LTS) may be applied. The layout of Figure 1 illustrates a number of rooms with doors illustrated by discontinuations in the room walls, and a hallway providing access from one room to another. People or items inside the building that are being location-tracked are represented by their user equipment or, as from now on called, mobile devices 120, 122, 124. The mobile device 120 to 124 may be an apparatus dedicated to the location tracking, e.g. a tag. In general, the apparatus comprising the mobile device 120 to 124 may have other functionalities. For example, the mobile device may be a cellular phone, a palm computer, or any other portable electronic device. In some embodiments where the LTS uses Bluetooth communication capability, the apparatus may be any Bluetooth or Bluetooth Low Energy capable device. The same analogy applies to radio access schemes other than the Bluetooth.

The location tracking is enabled by disposing a plurality of location tracking nodes (or LTS nodes) 100 to 112 throughout the area where the location tracking is to be carried out. The LTS nodes 100 to 112 may be radio communication devices, each configured to provide a radio coverage area effectively defined by transmission power and receiver sensitivity, for example, and the combined radio coverage areas of the LTS nodes 100 to 112 may be designed to cover the indoor location tracking area. The LTS nodes 100 to 112 may also form a fixed or static communication network infrastructure enabling data routing between the nodes 100 to 112 and through the nodes 100 to 112. Figure 2 illustrates an embodiment of such a network infrastructure. Referring to Figure 2, the network topology may be a pipeline topology where an arbitrary LTS node communicates with one or two neighbouring LTS nodes such that the LTS nodes form a pipelined structure. Other topologies are equally possible but the topology may be static or at least semi-static to enable reliable data transfer with low signalling and processing overhead. The LTS nodes 100 to 112 may be provided with a backup mechanism in preparation for one or more LTS nodes breaking and falling off from the network. An example of such a mechanism is providing an LTS node with an identifier of an auxiliary LTS node to which the LTS node connects to if it detects that one of its neighbouring LTS nodes has dropped from the network.

A location tracking apparatus or a module that may be comprised in a server 202 may be connected to the network of LTS nodes 100 to 112 directly or through a gateway node 200, and the location tracking apparatus may be configured to maintain locations of tracked objects and control the location tracking and other features of the LTS. The server 202 and the location tracking apparatus may be realized by a computer provided with suitable communication equipment so as to enable a communication connection with the LTS nodes 100 to 112. The server 202 may be connected to the gateway node 200 via an Internet Protocol (IP) connection, and the router may be configured to connect to the fixed network of LTS nodes 100 to 112 through another connection type. The connection in the fixed network of LTS nodes 100 to 112 may be established by using radio connections according to a Bluetooth technology, but it should be understood that other radio communication schemes may be used as well, e.g. IEEE 802.11, radio frequency identification (RFID), or Zigbee.

The locations of objects are tracked by tracking movement of tags 120 to 124 attached to the objects. As examples of the tags 120 to 124, a user tag may be carried by a person, and an asset tag may be attached to an asset. The asset may be any mobile or portable apparatus that is wanted to be tracked, e.g. a wheelchair, a computer, or expensive industrial testing equipment. The asset tag may equally be attached to a fixed apparatus, e.g. a safe, a projector, in order to detect attempted robbery. The different tags 120 to 124 whose movement and location are tracked may be called generally mobile devices, although some of the tags 120 to 128 may actually be in a substantially fixed position. The location tracking may be based on a scheme where a mobile device is configured to detect the closest LTS node and to transmit to the server 202 periodically a message comprising an identifier of the mobile device and an identifier of the detected closest LTS node, or a plurality of detected LTS nodes. The message may be routed through the fixed network of LTS nodes 100 to 112 to the server 202. As the server 202 is provided with information on fixed locations of the LTS nodes 100 to 112, e.g. in a layout of the area, the server 202 is able to associate the mobile device with the LTS node on the basis of the received message and, thus, determine the location of the mobile device and the object associated with the mobile device. In another embodiment, an LTS node is configured to detect mobile devices in its coverage area and transmit identifiers of detected mobile devices to the server 202. Similarly, the server 202 may then determine the location of each mobile device on the basis of the LTS nodes that have detected the mobile device. The detection of the LTS nodes or mobile devices may be based on Bluetooth Low Energy (BTLE) advertising procedure. The LTS may, however, utilize another location tracking scheme and/or another communication scheme.

The apparatus carrying out the detection and reporting to the server, e.g. an LTS node detecting mobile devices or a mobile device detecting LTS nodes, may be configured in a detection procedure to report a closest detected apparatus (as determined by the highest estimated reception power), a determined number of closest detected apparatuses, or all the detected apparatuses. The detection may include at least one threshold in the apparatus reporting the detection, e.g. a LTS node or a mobile device. The threshold may be a rapid detection threshold, and a mobile device may be configured to estimate a received signal strength indicator (RSSI) or another metric proportional to a reception power for a signal received from an LTS node. If the RSSI exceeds the rapid detection threshold, the mobile device may instantly link to the LTS node without waiting for further signals from other LTS nodes. This speeds up the positioning and reduces operations carried out in the mobile device, thereby also reducing power consumption. If the RSSI is below the rapid detection threshold, the mobile device may be configured to continue the detection procedure by attempting to detect other LTS nodes and then collectively transmit to the server a message comprising identifiers of the detected LTS nodes. The operation is similar when the LTS attempts to detect the mobile devices and applies the rapid detection threshold. Another example of the threshold is a discarding threshold, wherein those apparatuses that are detected but whose RSSI is below the discarding threshold are discarded from the report. This eliminates reporting and possible positioning to LTS nodes that are far from the mobile device.

Figure 2 illustrates examples of routing signals between the elements of the system according to an embodiment of the present invention. As already mentioned, the LTS node(s) 100 to 112 may transmit their unique identifiers (IDs) by utilizing the BTLE advertising messages or other connectionless means for radio transmitting/broadcasting a unique identifier without establishing an actual radio connection. The LTS nodes 100 to 112 may also form the fixed network used for routing messages in the LTS between the server and the mobile devices 120 to 124 and/or the LTS nodes 100 to 112. The mobile device(s) 120 to 124 detecting the radio transmissions/broadcasts of the LTS nodes 100 to 112 may connect to any one of the LTS nodes and to forward the detected unique identifiers to the server over the fixed network of LTS nodes configured to route signals through the network to the server 202. In another embodiment, the mobile devices may rely on connectionless broadcast transmissions for reporting the detected identifiers to the nearby LTS nodes that forward the report to the server. The mobile device may include its identifier, e.g. a transaction identifier or a device identifier, in the broadcast message. One or more of the LTS nodes may be connected to the gateway 200 connected also to a wired network, e.g. Ethernet, so as to connect to the server. The connection to the wired network may be realized by providing a router apparatus or a gateway node 200 providing a wireless connection with the fixed network through at least one LTS node 112 and the wired connection to the server 202. If the server 202 is located in a remote location, the connection between the fixed network and the server 202 may be routed through the Internet. The network may be based on any Bluetooth network technology. Other embodiments may utilize other communication technologies to implement the network, such as IEEE 802.11x (WiFi).

The server 202 may comprise a location tracking apparatus configured to monitor for the locations of the mobile devices 120 to 124. The server may additionally comprise a control apparatus or a control module configured to control operational parameters of the LTS and/or the mobile devices. The control apparatus may monitor and control the transmission powers and other communication parameters, control detection parameters such as the above-mentioned threshold(s), resolve link failures, etc.

It should be appreciated that at least some of the embodiments of the invention described below are applicable to other indoor positioning systems. Some indoor positioning systems do not require the LTS nodes but, instead, the mobile device measures its ambient environment, e.g. radio or magnetic environment. A magnetic map or a radio map of the indoor area may be charted beforehand by associating a unique magnetic or radio imprint with each location or area in the indoor area. The map may be created through test measurements in various locations in the indoor area. In use, the measurements made by the mobile device may be cross-reference with the map and a location having a unique imprint that provides the best match with the measurements may be determined as the current location of the mobile device.

Some state of the art mobile devices may support capability of positioning indoors and outdoors, e.g. positioning indoors with an indoor positioning system and positioning outdoors with a GNSS. The transition from the indoor positioning system to the outdoor positioning system may be made, for example, upon detecting that the mobile device is no longer capable of carrying out indoor positioning. Such a solution may cause disruption to the positioning because of time spent on attempting to carry out indoor positioning to no effect and time spent on scanning for satellites after detecting the failure in the indoor positioning.

Some state of the art mobile devices support assisted GPS (A-GPS) features. One feature of the A-GPS is use of preliminary information on the positioning satellites to facilitate and expedite discovery of the satellites. Such preliminary information may comprise almanac data and/or ephemeris data of the satellites. The almanac data may comprise coarse orbit and status information for each satellite, an ionospheric model, and information to map GPS-derived time to coordinated universal time (UTC). The ephemeris data contains orbital position data that enables a GPS receiver to calculate the position of the satellite. The almanac data is considered relatively stable but the ephemeris data is generally considered rather volatile and needs frequent update, at least within a few hours.

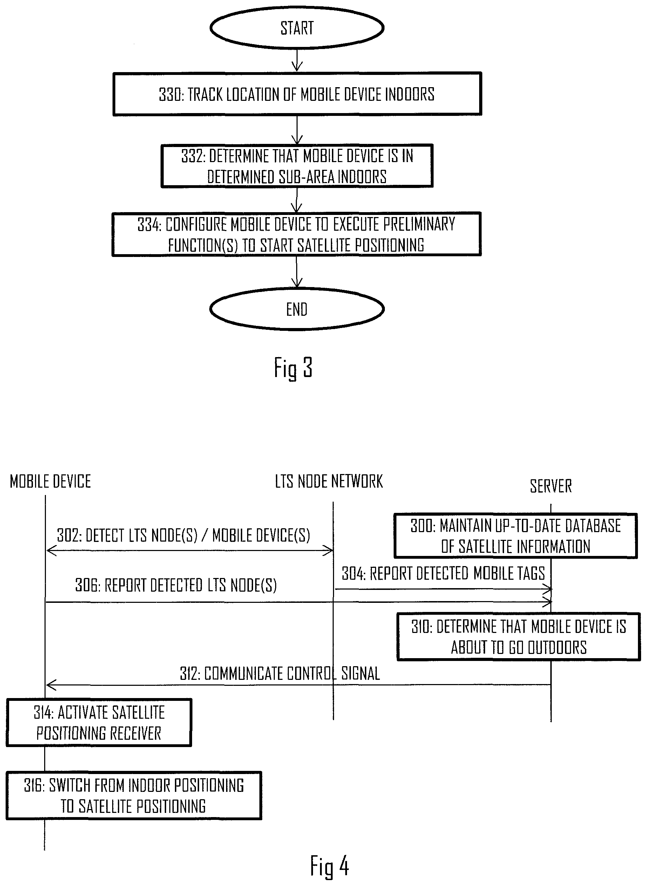

The invention provides a smooth transition from the indoor positioning to the outdoor positioning without breaks caused by abrupt disconnection of the indoor positioning, subsequent detection of the disconnection, and further subsequent powering up a GNSS receiver and searching for the satellites. The system and the method of the invention detect, on the basis of the indoor positioning that the mobile device is about the leave the indoor area and go outdoors and, accordingly, start preparations for the GNSS positioning while the indoor positioning is still operational. Accordingly, the mobile device is ready to switch from the indoor positioning to the GNSS positioning seamlessly. Figure 3 illustrates a process for preparing the mobile device for satellite positioning. The process may be carried out in the mobile device or in the location tracking apparatus, as described in greater detail below. Referring to Figure 3, the process comprises tracking the location of the mobile device in an indoor area (block 330). In block, 332, it is determined that the mobile device is in a determined sub-area of the indoor area. As a result of said determining, the mobile device is configured in block 334 to carry out at least one preliminary function to start satellite positioning.

The process of Figure 3 may be carried out by the location tracking apparatus comprised in the server or a controller comprised in the mobile device. In general, the positioning in steps 330 and 332 may be carried out by a positioning module comprised in the server or in the mobile device, and block 334 may be carried out by a controller apparatus that may be comprised in the server or in the mobile device.

In an embodiment, the preliminary function is a function that precedes scanning for GNSS satellites. In an embodiment, the at least one preliminary function comprises powering up a GNSS receiver of the mobile device. This embodiment enables the mobile device to conserve battery power indoors by shutting the GNSS receiver down automatically indoors and powering it automatically up when the outdoor positioning is about to be started. In another embodiment, the at least one preliminary function comprises updating the preliminary information, e.g. the almanac data and/or ephemeris data. This embodiment enables the mobile device to have the most recent preliminary information when it starts the satellite positioning. Accordingly, it may be ensured that even the volatile ephemeris data is up-to-date, thus expediting the discovery of the satellites.

In an embodiment, block 332 comprises determining that the mobile device is in or approaching location of an exit of the indoor area. In other words, block 332 may comprise detecting that the mobile device is about to go outdoors. In order to enable the detection, one or more locations at and/or close to the exit may be associated with a flag that indicates that the location triggers the execution of the preliminary function in the mobile device. Referring to Figure 1, a door 130 may represent the exit and the location of the LTS node 112 may be associated with the flag. When the mobile device is associated with the LTS node 112 in the indoor positioning, the execution of the preliminary function(s) may be triggered.

In a further embodiment, block 332 may comprise determining a direction from which the mobile device entered the sub-area. According to the direction, a specific function may be executed, wherein the function is different for different directions. For example, if the mobile device entered the sub-area from a first direction, e.g. from indoors, block 334 may be executed. If the mobile device entered the sub-area from a second direction, e.g. from outdoors, the mobile device may be configured to carry out at least one function to deactivate satellite navigation, e.g. shut down its GNSS receiver. With respect to this embodiment, when the mobile device is detected in another sub-area indoors, the mobile device may be configured to deactivate the satellite positioning or maintain deactivation of the satellite positioning. This other sub-area may be associated with a location which is not close to an exit. Accordingly, it may be determined that the mobile device is not about to exit the indoor area and, accordingly, the GNSS receiver may be shut down or its deactivation may be maintained in order to reduce power consumption.

The process of Figure 3 may be executed in a system for preparing the mobile device for satellite positioning. The system may comprise an indoor positioning system configured to track location of the mobile device in an indoor area. The system may further comprise a wireless communication network configured to provide the mobile device with a wireless network connection in a coverage area comprising the indoor area. In an embodiment, the wireless communication network and the indoor positioning system are realized by the LTS nodes and the server 202 of Figures 1 and 2. The indoor positioning system further comprises a controller, e.g. the location tracking apparatus, configured to determine that the mobile device is in a determined sub-area of the indoor area and, as a result of said determining, configure the mobile device to carry out the at least one preliminary function to start the satellite positioning.

Let us now describe some embodiments of the system and the process of Figure 3 with reference to Figures 4 to 6. Figures 4 to 6 illustrate signaling diagrams in connection with different types of systems. Figure 4 illustrates a signaling diagram in the system of Figures 1 and 2. Referring to Figure 4, a server (e.g. the server 202) may maintain an up-to-date database of the preliminary information on the satellites. The preliminary information may comprise the almanac data and/or the ephemeric data of the satellites. Block 300 may be executed periodically by accessing an Internet server storing the corresponding information. The server may execute block 300 more in time intervals that are shorter than the considered lifetime of the preliminary information (e.g. the above-mentioned few hours for the ephemeric data). Accordingly, the server may execute block 300 once per hour or even more frequently.

In block 302, the mobile device communicates with one or more LTS nodes of the indoor positioning system. The communication may be carried out as described above in connection with Figures 1 and 2. Accordingly, an association between the mobile device and one or more LTS nodes is created in block 302 for the indoor location tracking purposes. In steps 304, 306, the server receives from the LTS nodes and/or the mobile device a measurement report indicating this association. Depending on the configuration of the system, only one of steps 304, 306 may be executed, as described above. Upon receiving the association information, the server may determine the current location of the mobile device. On the basis of such indoor positioning, the server may in block 310 detect that the mobile device has entered an area marked with the flag that indicates that the mobile device is close to an exit of the indoor area. In response to the detection in block 310, the server may transmit a control signal to the mobile device through the LTS node network. The control signal may cause the mobile device the carry out the preliminary function(s). In an embodiment, the control signal comprises the latest preliminary information on the satellites. The mobile device may store the received preliminary information. In block 314 as a response to the reception of the control signal, the mobile device powers up or activates its satellite positioning receiver which has been shut down so far. In block 316, the mobile device switches from the indoor positioning to satellite positioning. In an embodiment, block 316 may be executed when the mobile device detects no LTS node. In an embodiment, block 316 is executed when the mobile device detects that the satellite positioning receiver is able to detect a sufficient number of positioning satellites to carry out the satellite positioning. As the LTS node network may be out of reach for communication, the mobile device may carry out the satellite positioning itself and report location coordinates to the server via a public network, e.g. by using a short message service (SMS) or a data transfer service of a cellular communication system (e.g. GSM, UMTS, LTE).

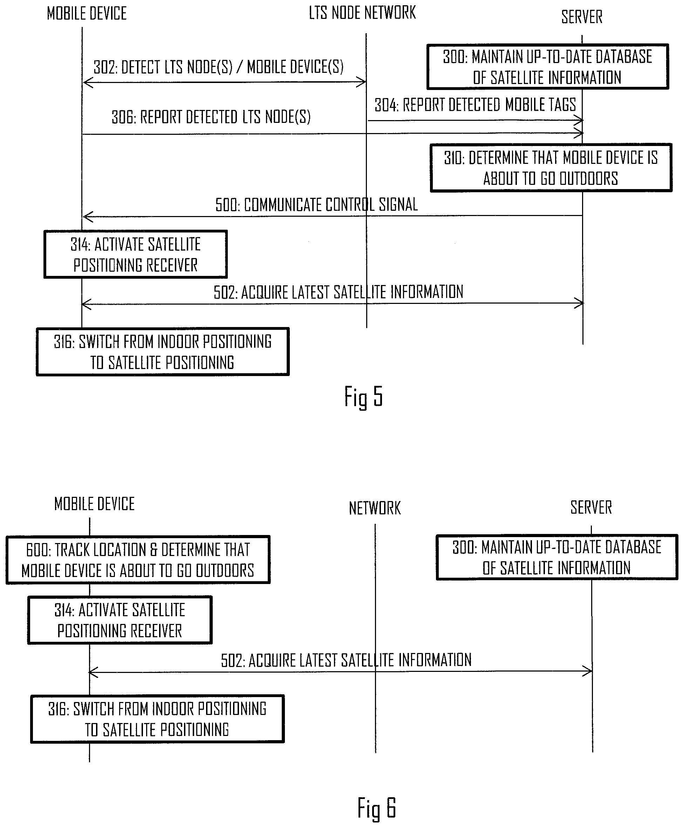

In Figure 5, the steps having the same reference numbers as in Figure 4 represent the same or substantially similar steps. In the embodiment of Figure 5, the control signal (step 500) comprises an activation signal that causes the mobile device to activate the satellite positioning receiver in block 314. The control signal also triggers the mobile device to connect to the server and retrieve the latest preliminary information on the satellites in step 502. The mobile device may connect to the server over the LTS node network, and the preliminary information may be transferred over the LTS node network. In another embodiment of Figure 5, step 502 may be modified such that the mobile device retrieves the preliminary satellite information from an Internet server. In other words, different servers may carry out the indoor location tracking and the provision of the preliminary satellite information.

In the embodiment of Figure 6, the indoor positioning system is provided in the mobile device. The indoor positioning system may be based on radio or magnetic measurements and the radio map or magnetic map created beforehand. Similarly to what has been disclosed above, one or more locations at or close to an exit of the indoor area may be flagged. Upon detecting that the mobile device has entered the flagged location in block 600, the mobile device may activate the satellite positioning receiver (block 314) and/or retrieve the latest preliminary information on the satellites from the server (step 502). After that, the mobile device may switch from the indoor positioning to the outdoor satellite positioning. In this embodiment, the wireless communication network may be provided by one or more access points distributed in the indoor area. The access points may comprise the above-described LTS nodes or conventional IEEE 802.11-based access points, for example.

In another embodiment of Figure 6, the mobile device may carry out the measurements and send measurement data over the wireless communication network to the server storing the map. The measurement data may comprise radio measurement data and/or magnetic field measurement data. The server may carry out the indoor positioning of the mobile device on the basis of the map and the received measurement data. Accordingly, the server may execute block 600 and send the above-described control signal (step 312 or 500) to the mobile device.

In yet another embodiment, radio frequency or magnetic gates may be used to trigger the transition between the indoor positioning and satellite positioning. In general, such gates may be called proximity gates detectable by the mobile device only at close proximity, e.g. less than one or two meters. Upon detecting such a gate through radio or magnetic proximity interaction, the mobile device may switch from the indoor positioning to the satellite positioning or from the satellite positioning to the indoor positioning, depending on which one is employed currently.

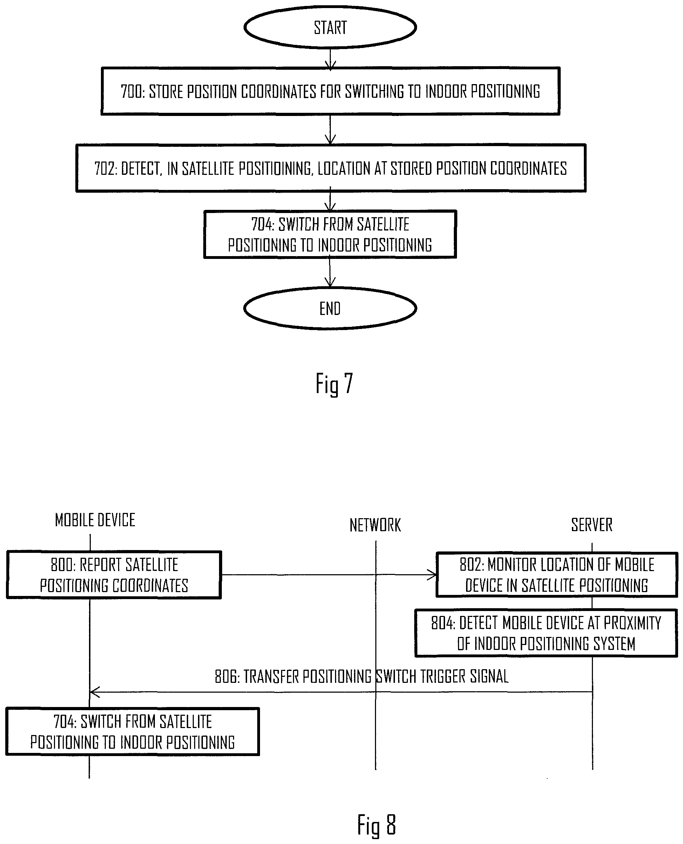

Figures 7 and 8 illustrate some embodiments for switching from the satellite positioning to the indoor positioning. Figure 7 illustrates a flow diagram of a process for switching from the satellite positioning to the indoor positioning in the mobile device according to an embodiment of the invention. Referring to Figure 7, the mobile device may store beforehand position coordinates that are triggering points for switching from the satellite positioning to the indoor positioning (block 700). The coordinates may be provided by the server through the wireless communication network, e.g. the LTS node network or a cellular communication network, or the coordinates may be stored in the mobile device in another manner. The coordinates may be arranged to define locations that are within a coverage area of the indoor positioning system and/or in or at least at a boundary of the area where indoor location tracking is performed. In block 702, while performing the satellite positioning, the mobile device detects that it is located in a location matching with one of the coordinates of block 700. Accordingly, the mobile device may activate, enable, or wake up its indoor positioning functions in block 704. During the transition from the satellite positioning to the indoor positioning, the mobile device may keep both positioning functions operational until it detects capability of performing the indoor positioning successfully, e.g. upon discovering and connecting to an LTS node successfully. After that, the mobile device may deactivate the satellite positioning functions, e.g. the satellite receiver.

Figure 8 illustrates another embodiment where the server controls the switching from the satellite positioning to the indoor positioning. Referring to Figure 8, the mobile device reports its satellite positioning coordinates to the server through the wireless communication network, e.g. the public cellular communication network in block 800. In general, the mobile device may send satellite positioning information to the server in block 800, e.g. the mobile device may send raw satellite signal data without first determining the location coordinates and the server may process the satellite signal data into the location coordinates. On the basis of the acquired coordinates, the server may track the location of the mobile device outdoors (block 802). The server may store the position coordinates that are triggering points for switching from the satellite positioning to the indoor positioning, as described above in connection with block 700. Upon detecting on the basis of the monitoring in block 802 that the mobile device is in one of these position coordinates (block 804), the server may transmit a positioning switch trigger signal to the mobile device, thus instructing the mobile device to switch from the satellite positioning to the indoor positioning (step 806). The trigger signal may be transmitted over the cellular communication network, for example. In response to the reception of the trigger signal in step 806, the mobile device switches from the satellite positioning to the indoor positioning, as described above in connection with block 704.

In the above-described embodiments, the connection between the server and the mobile device is provided through the wireless communication network which may be a private network. The wireless communication network may provide the connection without charge. Accordingly, the mobile device may be designed without a data transfer service of a public cellular communication system, for example. This reduces operational costs of the mobile device. Additionally, a radio modem of the mobile device may be designed to support only voice calls and/or SMSs and not high-speed cellular packet data connections. The data connections may be realized through the wireless communication network described above, e.g. the LTS node network.

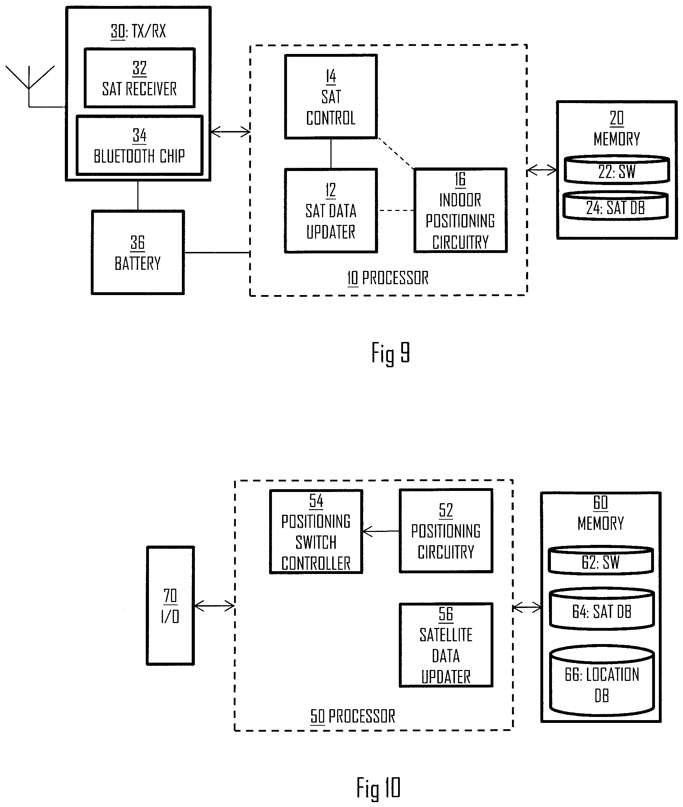

As described above, embodiments of the invention may be carried out in the mobile device and/or in the location tracking apparatus. In general, the embodiments of the invention may be carried out in an apparatus comprising at least one processor and at least one memory including a computer program code, wherein the at least one memory and the computer program code are configured, with the at least one processor, to cause the apparatus to carry out any one of the embodiments described above in connection with Figures 3 to 8. Figures 9 and 10 illustrate block diagrams of structures of some embodiments of the apparatus: the mobile device in Figure 9 and the location tracking apparatus configured to track locations of a plurality of mobile devices in Figure 10.

Referring to Figure 9, the apparatus comprised in the mobile device may comprise the at least one processor 10 or processing circuitry and the at least one memory 20 storing the computer program code 22. As the apparatus is designed to be mobile or portable, the apparatus may comprise a battery 36 providing the apparatus with electric power. The apparatus may further comprise a transceiver circuitry 30 comprising the above-described satellite receiver 32 configured to scan for positioning satellites and receive and decode signals received from the positioning satellites. The transceiver circuitry 30 may further comprise a bidirectional radio communication circuitry 34 configured to support at least one bidirectional radio communication protocol, e.g. Bluetooth or Wi-Fi (IEEE 802.11).

The processor 10 may comprise an indoor positioning circuitry configured to perform at least some operations of the indoor positioning in the mobile device. In an embodiment, the indoor positioning circuitry is configured to determine LTS nodes detected with the bidirectional radio communication circuitry 34 and to create a measurement report and transmit the measurement report to the server through the bidirectional radio communication circuitry 34. In another embodiment, the indoor positioning circuitry 16 is configured to cause the bidirectional radio communication circuitry 34 to measure a radio environment and cross-reference the measured radio environment with a radio map stored in the memory 20 in order to determine the current location coordinates of the mobile device. In another embodiment, the indoor positioning circuitry 16 is configured to cause a magnetic measurement circuitry of the apparatus to measure a magnetic field around the mobile device and cross-reference the measured magnetic field with a magnetic map stored in the memory 20 in order to determine the current location coordinates of the mobile device. In some embodiments where the LTS nodes detect the mobile devices, the indoor positioning may be transparent to the mobile device and, in such embodiments, the indoor positioning circuitry 16 may be omitted.

The processor 10 may further comprise a satellite data updater circuitry 12 configured to update the preliminary satellite information. The satellite data updater circuitry 12 may be configured to retrieve the latest preliminary satellite information from a server upon receiving a triggering signal from the bidirectional radio communication circuitry 34 and/or from the indoor positioning circuitry 16. The satellite data updater circuitry 12 may be configured to control the bidirectional radio communication circuitry 34 to establish a connection to the server. In other embodiments, the satellite data updater circuitry 12 may receive the preliminary satellite information as periodic updates through the bidirectional radio communication circuitry 34. The preliminary satellite information may be stored in the memory 20 as a satellite data record 24.

The processor 10 may further comprise a satellite positioning controller 14 configured to control the switch between the indoor positioning and the satellite positioning in the apparatus. The satellite positioning controller 14 may be configured to power up and shut down the satellite receiver 32 according to a determined criterion. For example, when the satellite positioning controller receives an activation control signal from the indoor positioning circuitry 16 or through the bidirectional radio communication circuitry 34, the satellite positioning controller 14 may switch the satellite receiver on. In some embodiments, this may be carried out while the indoor positioning is still in use and operational. The satellite positioning controller 14 may monitor the satellite receiver 32 and, upon detecting that the satellite receiver has detected a sufficient number of satellites and is able to compute location coordinates of the mobile device, the satellite positioning controller 14 may switch the indoor positioning circuitry 16 off. On the other hand, when the satellite positioning controller 14 receives a deactivation control signal through the bidirectional radio communication circuitry 34, detects inability to carry out satellite positioning, or detects the presence of the indoor positioning system with the bidirectional radio communication circuitry 34, the satellite positioning controller 14 may switch the satellite receiver 32 off and, optionally, the indoor positioning circuitry 16 on.

Referring to Figure 10, the apparatus comprised in the server or the location tracking apparatus may comprise the at least one processor 50 or processing circuitry and the at least one memory 60 storing the computer program code 62. The apparatus may further comprise an input/output (I/O) circuitry 70 configured to provide the apparatus with communication capability. The I/O circuitry 70 may be configured to establish local area network (LAN) connections, wide area network connection (WAN) connections, TCP/IP (transport control protocol / internet protocol) connections, and/or other forms of network connections. In general, the I/O circuitry 70 enables the server to communication with the mobile devices and, in some embodiments, with the LTS nodes.

The processor 50 may comprise a satellite data updater circuitry 56 configured to update the preliminary satellite information. The satellite data updater circuitry 56 may be configured to retrieve the latest preliminary satellite information from a publicly accessible internet server regularly and store it in a satellite database 64 in the memory 60. The update of the preliminary satellite information may be so regular that the preliminary satellite information can be considered to be valid and up-to-date all the time. The updating frequency depend on the features satellite positioning system and the volatility of the preliminary satellite information, and the skilled person may choose appropriate updating frequency as desired. It should be appreciated that the server may have a constant internet connection and, accordingly, the updating frequency may be high, e.g. once per minute or even higher.

The processor 50 may further comprise a positioning circuitry configured to track locations of a plurality of mobile devices indoors and outdoors, as described above. The memory 60 may store reference locations in a location database 66, wherein each reference location may be mapped to an LTS node or a unique radio/magnetic environment. Accordingly, the positioning circuitry may map measurement reports received from the LTS nodes and/or mobile devices to the reference locations and determine the current locations of the mobile devices indoors. The positioning circuitry 52 may store the current locations of the mobile devices in the location database 66. Upon mapping the current location of a mobile device to a given reference location, the positioning circuitry 52 may check whether or not the reference location is associated with the above-described flag triggering the preparations for the satellite positioning. If such a flag exists, the positioning circuitry may output a control signal to a positioning switch controller 54 controlling the transition from the indoor positioning to the satellite positioning. The positioning switch controller 54 may, upon receiving the control signal, transmit the above-described control signal to the mobile device, thus triggering the mobile device to execute the at least function in preparation for starting the satellite positioning. As described above, the control signal may cause the mobile device to activate the satellite receiver 32 and/or to update the preliminary satellite information.

As used in this application, the term 'circuitry' refers to all of the following: (a) hardware-only circuit implementations such as implementations in only analog and/or digital circuitry; (b) combinations of circuits and software and/or firmware, such as (as applicable): (i) a combination of processor(s) or processor cores; or (ii) portions of processor(s)/software including digital signal processor(s), software, and at least one memory that work together to cause an apparatus to perform specific functions; and (c) circuits, such as a microprocessor(s) or a portion of a microprocessor(s), that require software or firmware for operation, even if the software or firmware is not physically present.

This definition of 'circuitry' applies to all uses of this term in this application. As a further example, as used in this application, the term "circuitry" would also cover an implementation of merely a processor (or multiple processors) or portion of a processor, e.g. one core of a multi-core processor, and its (or their) accompanying software and/or firmware. The term "circuitry" would also cover, for example and if applicable to the particular element, a baseband integrated circuit, an application-specific integrated circuit (ASIC), and/or a field-programmable grid array (FPGA) circuit for the apparatus according to an embodiment of the invention.

The processes or methods described in Figures 4 to 8 may also be carried out in the form of a computer process defined by a computer program. The computer program may be in source code form, object code form, or in some intermediate form, and it may be stored in some sort of carrier, which may be any entity or device capable of carrying the program. Such carriers include transitory and/or non-transitory computer media, e.g. a record medium, computer memory, read-only memory, electrical carrier signal, telecommunications signal, and software distribution package. Depending on the processing power needed, the computer program may be executed in a single electronic digital processing unit or it may be distributed amongst a number of processing units.

The present invention is applicable to cellular or mobile telecommunication systems defined above but also to other suitable telecommunication systems. The protocols used, the specifications of mobile telecommunication systems, their network elements and subscriber terminals, develop rapidly. Such development may require extra changes to the described embodiments. Therefore, all words and expressions should be interpreted broadly and they are intended to illustrate, not to restrict, the embodiment. It will be obvious to a person skilled in the art that, as technology advances, the inventive concept can be implemented in various ways. The invention and its embodiments are not limited to the examples described above but may vary within the scope of the claims.

## Claims

1. A system for preparing a mobile device (120, 122, 124) for satellite positioning, the system comprising:
an indoor positioning system configured to track location of the mobile device in an indoor area;
wireless communication means (34, 100, 102) for providing the mobile device with a wireless network connection in a coverage area comprising the indoor area; and
a controller (10, 50) configured to determine that the mobile device is in a determined sub-area of the indoor area and, as a result of said determining, configure the mobile device to carry out at least one preliminary function to start satellite positioning,
**characterized in that** the at least one preliminary function is carried out while the indoor positioning of the mobile device is still operational;
wherein said at least one preliminary function comprises reception, in the mobile device through the wireless communication means, of preliminary information facilitating detection of positioning satellites.

2. The system of claim 1, wherein the at least one preliminary function further comprises powering up a satellite positioning receiver (32) of the mobile device.

3. The system of claim 1, wherein the preliminary information comprises at least one of almanac data and ephemeric data of positioning satellites.

4. The system of any preceding claim, wherein the controller is configured to determine that the mobile device is in or approaching location of an exit of the indoor area and, as a result of said determining, configure the mobile device to carry out the at least one preliminary function.

5. The system of any preceding claim, wherein the indoor positioning system and the wireless communication means are provided by a plurality of location tracking nodes (100, 102, 104, 106, 108, 110, 112) disposed to provide a radio coverage covering the indoor area, wherein locations of the location tracking nodes are stored in a database (66) accessible to the controller, wherein the controller is configured to perform the location tracking of the mobile device by determining at least one location tracking node having the mobile device in its radio coverage area and, in response to determining that the at least one location tracking node having the mobile device in its radio coverage area is located in the sub-area, configuring the mobile device to carry out the at least one preliminary function to start the satellite positioning.

6. The system of any preceding claim, wherein the controller is configured to determine that the mobile device is in a second sub-area of the indoor area and, as a result of said determining, deactivate the satellite positioning or maintain deactivation of the satellite positioning of the mobile device.

7. The system of any preceding claim, wherein the controller is configured to store beforehand position coordinates that are triggering points for switching from the satellite positioning to the indoor positioning, to receive satellite positioning information from the mobile device while the mobile device is performing satellite positioning, to determine on the basis of the received satellite positioning information and the stored position coordinates to configure the mobile device to start indoor positioning, and to transmit a control signal to the mobile device to configure the mobile device to start the indoor positioning.

8. A method for preparing a mobile device (120, 122, 124) for satellite positioning, the method comprising:
tracking (330) location of the mobile device in an indoor area by employing an indoor positioning system;
providing, with wireless communication means, the mobile device with a wireless network connection in a coverage area comprising the indoor area;
determining (332), by a controller apparatus, that the mobile device is in a determined sub-area of the indoor area and, as a result of said determining, configuring (334) the mobile device to carry out at least one preliminary function to start satellite positioning,
**characterized in that** the at least one preliminary function is carried out while the indoor positioning of the mobile device is still operational; wherein said at least one preliminary function comprises receiving (502), in the mobile device through the wireless communication means, preliminary information facilitating detection of positioning satellites.

9. The method of claim 8, wherein the at least one preliminary function further comprises powering (314) up a satellite positioning receiver of the mobile device.

10. The method of claim 8, wherein the preliminary information comprises at least one of almanac data and ephemeric data of positioning satellites.

11. The method of any preceding claim 8 to 10, further comprising determining, by the controller apparatus, that the mobile device is in or approaching location of an exit of the indoor area and, as a result of said determining, configuring the mobile device to carry out the at least one preliminary function.

12. The method of any preceding claim 8 to 11, wherein the indoor positioning system and the wireless communication means are provided by a plurality of location tracking nodes disposed to provide a radio coverage covering the indoor area, the method further comprising storing locations of the location tracking nodes in a database accessible to the controller apparatus, performing, by the controller apparatus, the location tracking of the mobile device by determining at least one location tracking node having the mobile device in its radio coverage area and, in response to determining that the at least one location tracking node having the mobile device in its radio coverage area is located in the sub-area, configuring the mobile device to carry out the at least one preliminary function to start the satellite positioning.

13. The method of any preceding claim 8 to 12, further comprising determining (702), by the controller apparatus, that the mobile device is in a second sub-area of the indoor area and, as a result of said determining, deactivating (704) the satellite positioning or maintaining deactivation of the satellite positioning of the mobile device.

## Patentansprüche

1. System zum Vorbereiten einer mobilen Vorrichtung (120, 122, 124) für eine Satellitenpositionsbestimmung, wobei das System Folgendes umfasst:
ein Innenraumpositionsbestimmungssystem, das dazu ausgelegt ist, den Ort der mobilen Vorrichtung in einem Innenraumbereich zu verfolgen;
drahtlose Kommunikationsmittel (34, 100, 102) zum Bereitstellen einer drahtlosen Netzwerkverbindung in einem Abdeckungsbereich, der den Innenraumbereich umfasst, für die mobile Vorrichtung und
eine Steuerung (10, 50), die dazu ausgelegt ist zu bestimmen, dass sich die mobile Vorrichtung in einem bestimmten Unterbereich des Innenraumbereichs befindet, und als ein Ergebnis des Bestimmens die mobile Vorrichtung dazu auszulegen, mindestens eine vorläufige Funktion zum Starten der Satellitenpositionsbestimmung auszuführen,
**dadurch gekennzeichnet, dass** die mindestens eine vorläufige Funktion ausgeführt wird, während die Innenraumpositionsbestimmung der mobilen Vorrichtung noch betrieben wird;
wobei die mindestens eine vorläufige Funktion den Empfang von vorläufigen Informationen, die die Detektion von Positionsbestimmungssatelliten ermöglichen, in der mobilen Vorrichtung über die drahtlosen Kommunikationsmittel umfasst.

2. System nach Anspruch 1, wobei die mindestens eine vorläufige Funktion ferner das Einschalten eines Satellitenpositionsbestimmungsempfängers (32) der mobilen Vorrichtung umfasst.

3. System nach Anspruch 1, wobei die vorläufigen Informationen mindestens eines von Almanachdaten und Ephemeridendaten von Positionsbestimmungssatelliten umfassen.

4. System nach einem der vorhergehenden Ansprüche, wobei die Steuerung dazu ausgelegt ist zu bestimmen, dass sich die mobile Vorrichtung an einem Ort des Ausgangs des Innenraumbereichs befindet oder sich demselben annähert, und als ein Ergebnis des Bestimmens die mobile Vorrichtung dazu auszulegen, die mindestens eine vorläufige Funktion auszuführen.

5. System nach einem der vorhergehenden Ansprüche, wobei das Innenraumpositionsbestimmungssystem und die drahtlosen Kommunikationsmittel von einer Vielzahl von Ortsverfolgungsknoten (100, 102, 104, 106, 108, 110, 112) bereitgestellt werden, die angeordnet sind, eine Funkabdeckung, die den Innenraumbereich abdeckt, bereitzustellen, wobei Orte der Ortsverfolgungsknoten in einer Datenbank (66) gespeichert sind, auf die die Steuerung zugreifen kann, wobei die Steuerung dazu ausgelegt ist, die Ortsverfolgung der mobilen Vorrichtung durch Bestimmen von mindestens einem Ortsverfolgungsknoten, in dessen Funkabdeckungsbereich sich die mobile Vorrichtung befindet, und in Reaktion auf das Bestimmen, dass sich der mindestens eine Ortsverfolgungsknoten, in dessen Funkabdeckungsbereich sich die mobile Vorrichtung befindet, im Unterbereich befindet, Auslegen der mobilen Vorrichtung zum Ausführen der mindestens einen vorläufigen Funktion, um die Satellitenpositionsbestimmung zu starten, durchzuführen.

6. System nach einem der vorhergehenden Ansprüche, wobei die Steuerung dazu ausgelegt ist zu bestimmen, dass sich die mobile Vorrichtung in einem zweiten Unterbereich des Innenraumbereichs befindet, und als ein Ergebnis des Bestimmens die Satellitenpositionsbestimmung zu deaktivieren oder die Deaktivierung der Satellitenpositionsbestimmung der mobilen Vorrichtung aufrechtzuerhalten.

7. System nach einem der vorhergehenden Ansprüche, wobei die Steuerung dazu ausgelegt ist, Positionskoordinaten, die Auslösepunkte für das Umschalten von der Satellitenpositionsbestimmung auf die Innenraumpositionsbestimmung sind, vorab zu speichern, Satellitenpositionsbestimmungsinformationen von der mobilen Vorrichtung zu empfangen, während die mobile Vorrichtung die Satellitenpositionsbestimmung durchführt, auf Basis der empfangenen Satellitenpositionsbestimmungsinformationen und der gespeicherten Positionskoordinaten zu bestimmen, die mobile Vorrichtung dazu auszulegen, die Innenraumpositionsbestimmung zu starten, und ein Steuersignal zur mobilen Vorrichtung zu übertragen, um die mobile Vorrichtung dazu auszulegen, die Innenraumpositionsbestimmung zu starten.

8. Verfahren zum Vorbereiten einer mobilen Vorrichtung (120, 122, 124) für eine Satellitenpositionsbestimmung, wobei das Verfahren Folgendes umfasst:
Verfolgen (330) eines Ortes der mobilen Vorrichtung in einem Innenraumbereich durch Einsetzen eines Innenraumpositionsbestimmungssystems;
Bereitstellen einer drahtlosen Netzwerkverbindung in einem Abdeckungsbereich, der den Innenraumbereich umfasst, mit drahtlosen Kommunikationsmitteln für die mobile Vorrichtung;
Bestimmen (332) durch eine Steuereinrichtung, dass sich die mobile Vorrichtung in einem bestimmten Unterbereich des Innenraumbereichs befindet, und als ein Ergebnis des Bestimmens, Auslegen (334) der mobilen Vorrichtung, mindestens eine vorläufige Funktion zum Starten der Satellitenpositionsbestimmung auszuführen,
**dadurch gekennzeichnet, dass** die mindestens eine vorläufige Funktion ausgeführt wird, während die Innenraumpositionsbestimmung der mobilen Vorrichtung noch betrieben wird;
wobei die mindestens eine vorläufige Funktion das Empfangen (502) vorläufiger Informationen, die die Detektion von Positionsbestimmungssatelliten ermöglichen, in der mobilen Vorrichtung über die drahtlosen Kommunikationsmittel umfasst.

9. Verfahren nach Anspruch 8, wobei die mindestens eine vorläufige Funktion ferner das Einschalten (314) eines Satellitenpositionsbestimmungsempfängers der mobilen Vorrichtung umfasst.

10. Verfahren nach Anspruch 8, wobei die vorläufigen Informationen mindestens eines von Almanachdaten und Ephemeridendaten von Positionsbestimmungssatelliten umfassen.

11. Verfahren nach einem der vorhergehenden Ansprüche 8 bis 10, das ferner das Bestimmen durch die Steuereinrichtung, dass sich die mobile Vorrichtung an einem Ort des Ausgangs des Innenraumbereichs befindet oder sich demselben annähert, und als ein Ergebnis des Bestimmens das Auslegen der mobilen Vorrichtung, die mindestens eine vorläufige Funktion auszuführen, umfasst.

12. Verfahren nach einem der vorhergehenden Ansprüche 8 bis 11, wobei das Innenraumpositionsbestimmungssystem und die drahtlosen Kommunikationsmittel von einer Vielzahl von Ortsverfolgungsknoten bereitgestellt werden, die angeordnet sind, eine Funkabdeckung, die den Innenraumbereich abdeckt, bereitzustellen, wobei das Verfahren ferner das Speichern von Orten der Ortsverfolgungsknoten in einer Datenbank, auf die die Steuereinrichtung zugreifen kann, das Durchführen der Ortsverfolgung der mobilen Vorrichtung durch Bestimmen von mindestens einem Ortsverfolgungsknoten, in dessen Funkabdeckungsbereich sich die mobile Vorrichtung befindet, und in Reaktion auf das Bestimmen, dass sich der mindestens eine Ortsverfolgungsknoten, in dessen Funkabdeckungsbereich sich die mobile Vorrichtung befindet, im Unterbereich befindet, das Auslegen der mobilen Vorrichtung zum Ausführen der mindestens einen vorläufigen Funktion, um die Satellitenpositionsbestimmung zu starten, umfasst.

13. Verfahren nach einem der vorhergehenden Ansprüche 8 bis 12, das ferner das Bestimmen (702) durch die Steuereinrichtung, dass sich die mobile Vorrichtung in einem zweiten Unterbereich des Innenraumbereichs befindet, und als ein Ergebnis des Bestimmens das Deaktivieren (704) der Satellitenpositionsbestimmung oder das Aufrechterhalten der Deaktivierung der Satellitenpositionsbestimmung der mobilen Vorrichtung umfasst.

## Revendications

1. Système de préparation d'un dispositif mobile (120, 122, 124) pour le positionnement par satellite, le système comprenant :
un système de positionnement en intérieur configuré pour suivre la localisation du dispositif mobile dans une zone en intérieur ;
des moyens de communication sans fil (34, 100, 102) pour fournir au dispositif mobile une connexion de réseau sans fil dans une zone de couverture comprenant la zone en intérieur ; et
un dispositif de commande (10, 50) configuré pour déterminer que le dispositif mobile se trouve dans une sous-zone déterminée de la zone en intérieur et, suite à ladite détermination, configurer le dispositif mobile pour qu'il effectue au moins une fonction préliminaire afin de commencer le positionnement par satellite ;
**caractérisé en ce que** l'au moins une fonction préliminaire est effectuée pendant que le positionnement en intérieur du dispositif mobile est encore opérationnel ;
dans lequel ladite au moins une fonction préliminaire comprend la réception, sur le dispositif mobile, par les moyens de communication sans fil, d'informations préliminaires facilitant la détection de satellites de positionnement.

2. Système de la revendication 1, dans lequel l'au moins une fonction préliminaire comprend en outre la mise sous tension d'un récepteur de positionnement par satellite (32) du dispositif mobile.

3. Système de la revendication 1, dans lequel les informations préliminaires comprennent au moins des données parmi des données d'almanach et des données des éphémérides de satellites de positionnement.

4. Système de l'une des revendications précédentes, dans lequel le dispositif de commande est configuré pour déterminer que le dispositif mobile se trouve à une localisation d'une sortie de la zone en intérieur ou s'en approche et, suite à ladite détermination, configurer le dispositif mobile pour qu'il effectue l'au moins une fonction préliminaire.

5. Système de l'une des revendications précédentes, dans lequel le système de positionnement en intérieur et les moyens de communication sans fil sont fournis par une pluralité de nœuds de suivi de localisation (100, 102, 104, 106, 108, 110, 112) disposés pour fournir une couverture radio couvrant la zone en intérieur, dans lequel les localisations des nœuds de suivi de localisation sont stockées dans une base de données (66) accessible au dispositif de commande, dans lequel le dispositif de commande est configuré pour réaliser le suivi de localisation du dispositif mobile en déterminant au moins un nœud de suivi de localisation ayant le dispositif mobile dans sa zone de couverture radio et, en réponse à la détermination selon laquelle l'au moins un nœud de suivi de localisation ayant le dispositif mobile dans sa zone de couverture radio se situe dans la sous-zone, configurer le dispositif mobile pour qu'il effectue l'au moins une fonction préliminaire afin de commencer le positionnement par satellite.

6. Système de l'une des revendications précédentes, dans lequel le dispositif de commande est configuré pour déterminer que le dispositif mobile se trouve dans une deuxième sous-zone de la zone en intérieur et, suite à ladite détermination, désactiver le positionnement par satellite ou maintenir la désactivation du positionnement par satellite du dispositif mobile.

7. Système de l'une des revendications précédentes, dans lequel le dispositif de commande est configuré pour stocker au préalable des coordonnées de position, qui sont des points de déclenchement pour passer du positionnement par satellite au positionnement en intérieur, pour recevoir des informations de positionnement par satellite à partir du dispositif mobile pendant que le dispositif mobile réalise le positionnement par satellite, pour déterminer, sur la base des informations de positionnement par satellite reçues et des coordonnées de position stockées, pour configurer le dispositif mobile afin de commencer le positionnement en intérieur, et pour transmettre un signal de commande au dispositif mobile pour configurer le dispositif mobile afin de commencer le positionnement en intérieur.

8. Procédé de préparation d'un dispositif mobile (120, 122, 124) pour le positionnement par satellite, le procédé comprenant les étapes consistant à :
suivre (330) la localisation du dispositif mobile dans une zone en intérieur en utilisant un système de positionnement en intérieur ;
fournir, à l'aide de moyens de communication sans fil, une connexion de réseau sans fil au dispositif mobile dans une zone de couverture comprenant la zone en intérieur ;
déterminer (332), par un appareil de dispositif de commande, que le dispositif mobile se trouve dans une sous-zone déterminée de la zone en intérieur et, suite à ladite détermination, configurer (334) le dispositif mobile pour qu'il effectue au moins une fonction préliminaire afin de commencer le positionnement par satellite,
**caractérisé en ce que** l'au moins une fonction préliminaire est effectuée pendant que le positionnement en intérieur du dispositif mobile est encore opérationnel ;
dans lequel ladite au moins une fonction préliminaire comprend la réception (502), sur le dispositif mobile, par les moyens de communication sans fil, d'informations préliminaires facilitant la détection de satellites de positionnement.

9. Procédé de la revendication 8, dans lequel l'au moins une fonction préliminaire comprend en outre la mise sous tension (314) d'un récepteur de positionnement par satellite du dispositif mobile.

10. Procédé de la revendication 8, dans lequel les informations préliminaires comprennent au moins une donnée parmi des données d'almanach et des données des éphémérides de satellites de positionnement.

11. Procédé de l'une des revendications précédentes 8 à 10, comprenant en outre les étapes consistant à déterminer, par l'appareil de dispositif de commande, que le dispositif mobile se trouve à une localisation d'une sortie de la zone en intérieur ou s'en approche et, suite à ladite détermination, configurer le dispositif mobile pour qu'il effectue l'au moins une fonction préliminaire.

12. Procédé de l'une des revendications précédentes 8 à 11, dans lequel le système de positionnement en intérieur et les moyens de communication sans fil sont fournis par une pluralité de nœuds de suivi de localisation disposés pour fournir une couverture radio couvrant la zone en intérieur, le procédé comprenant en outre les étapes consistant à stocker les localisations des nœuds de suivi de localisation dans une base de données accessible à l'appareil de dispositif de commande, réaliser, par l'appareil de dispositif de commande, le suivi de localisation du dispositif mobile en déterminant au moins un nœud de suivi de localisation ayant le dispositif mobile dans sa zone de couverture radio et, en réponse à la détermination selon laquelle l'au moins un nœud de suivi de localisation ayant le dispositif mobile dans sa zone de couverture radio est situé dans la sous-zone, configurer le dispositif mobile pour qu'il effectue l'au moins une fonction préliminaire afin de commencer le positionnement par satellite.

13. Procédé de l'une des revendications précédentes 8 à 12, comprenant en outre les étapes consistant à déterminer (702), par l'appareil de dispositif de commande, que le dispositif mobile se trouve dans une deuxième sous-zone de la zone en intérieur et, suite à ladite détermination, désactiver (704) le positionnement par satellite ou maintenir la désactivation du positionnement par satellite du dispositif mobile.
